# EUROPEAN PATENT SPECIFICATION

(11) **EP 3 915 949 B1**
(45) Date of publication and mention of the grant of the patent: **03.07.2024**
(21) Application number: 20177567.3
(22) Date of filing: 29.05.2020
(51) Int. Cl.: C03B 7/00, C03B 9/41, C03B 7/086, C03B 9/193, C03B 9/36, C03B 9/38

(54) **GLASS FORMING MACHINE WITH INDIVIDUALLY CONTROLLED PLUNGER END POSITIONS**
GLASFORMMASCHINE MIT INDIVIDUELL GESTEUERTEN KOLBENENDPOSITIONEN
MACHINE DE FORMATION DE VERRE AYANT DES POSITIONS D'EXTRÉMITÉ DE PISTON À COMMANDE INDIVIDUELLE

(43) Date of publication of application: 01.12.2021
(73) Proprietor: Emhart Glass S.A., 6312 Steinhausen (CH)
(72) Inventor: HELFENSTEIN, Andreas Walter, 6003 Luzern (CH); DIEHM, Leo, 6330 Cham (CH)
(74) Representative: Gille Hrabal Partnerschaftsgesellschaft mbB Patentanwälte

(56) References cited:
- EP-A2- 0 488 136

## Description

The invention relates to a glass forming machine and a method for manufacturing formed glass parisons.

A glass forming machine is described which includes a blank side for forming parisons from gobs of molten glass. The blank side includes a plunger and a blank mould. The plunger can be moved into a blank mould up to an end position. The plunger can be moved out of the blank mould up to a start position.

The glass forming machine includes a glass feeding device. The glass feeding device provides a gob of molten glass. The gob of molten glass falls into the blank mould. The plunger has reached its end position when the cavity of the blank mould is completely filled with glass and a part of the plunger. There is then no more air in the blank mould.

The glass feeding device may comprise a feeder bowl which can contain molten glass. The feeder bowl has a discharge orifice to emit a molten glass stream. The glass feeding device may comprise a shear mechanism. A stream of molten glass emerging from the feeder bowl can be divided into gobs by the shear mechanism.

A glass forming machine having a blank side is known from US 4,004,906. Two plungers of the blank side are mounted to a supporting arm. Means are provided for moving the supporting arm from a start position, and for causing these plungers to descend into end positions. Another glass forming machine is known from US 4,816,057. It is known from this document to adjust the height of needles in order to achieve a constant weight for parisons. A glass forming machine which includes a corresponding glass feeding device is also known from US 2020/0055763 A1. DE 26 00 029 A1 describes a similar glass forming machine with means for pivoting the produced parisons in an upright position. DE 10 2012 103 957 A1 discloses a device for producing hollow bodies from a glass melt with a cooled movable plunger and inner and outer neck rings. DE 10 2014 115 372 A1 describes a pressing device for a glass forming station with a plunger movable by an electronic motor. The motor itself is axially movable along the movement axis. EP 0 488 136 A2 describes a glass bottle forming machine in which the weight of a gob which has been distributed to a parison forming means is detected and the gob forming means is controlled such that the detected gob weight becomes a predetermined weight.

It is the object of the invention to produce parisons of good quality with little technical effort. The object of the invention is solved by the subject matter of claim 1 and the additional method claim 12. The sub-claims refer to improved embodiments.

The glass forming machine of the present invention includes a blank side for forming parisons from gobs of molten glass. The blank side includes a plunger and a blank mould. The plunger can be moved into the blank mould up to an end position. The plunger can be moved out of the blank mould up to a start position. The glass forming machine includes a glass feeding device which is configured to provide a gob of molten glass. The glass forming machine includes a measuring device which is configured to measure the end position of the plunger. The glass feeding device is configured such that the size of a gob of molten glass depends on the end position previously reached during operation.

A gob of molten glass is a compact amount of molten glass, in particular a discrete portion of a continuous glass stream that has been separated, which is used for forming a parison. A parison is a preform of glass used for producing a container made of glass such as a glass bottle.

A blank side is a device for forming parisons from gobs of molten glass. A blank mould is a device containing a cavity in which a gob of molten glass can be introduced in order to be formed for producing a parison. A plunger is a piston configured to move into and/or within the cavity of the blank mould in order to form molten glass into a parison. In particular, it is an elongate and/or at least partly conical element.

The plunger plunges into the gob which is placed inside the blank mould. It is moved towards the end position and thus displaces molten glass, pressing it against the walls of the cavity which is formed by the blank mould, in order to form the parison. The blank mould thus defines at least a portion of the outer shape of the parison. The plunger is moved from the end position towards the start position in order to insert a gob of molten glass into the blank mould. The gob can be inserted while the plunger is moved. The end position may be an upper position. The start position may be a lower position. In particular, a portion of the plunger plunges into the blank mould. Thus, in the end position, the plunger may be only partially placed within the blank mould.

A glass feeding device is a device for providing molten glass, in particular gobs of molten glass. The glass feeding device may be configured to fed the gob into the blank mould from the side which is opposite of the plunger and/or from the upper side. The feeder bowl serves for discharging molten glass through the discharge orifice. It may be fed with molten glass from a furnace. A feeder bowl is not limited in size or shape. Any container suitable to contain molten glass can be a feeder bowl according to the invention.

The glass feeding device is configured such that the size of the gob of molten glass depends on the end position of the plunger previously reached during operation. In particular, the glass feeding device uses the end position of the plunger which the measuring device has measured previously, e.g. in a previous cycle. A cycle comprises bringing a gob of molten glass into the blank mould, forming it into a parison by plunger movement, and removing the parison from the blank mould. By these means, the plunger position can be adapted in each cycle. Thus, any change in the volume of the cavity can be immediately compensated and the quality of the parisons is constantly high. In addition, the blank moulds can have a longer lifetime. By monitoring the end positions of the plunger, potential defects in the glass bottles can be detected. In one configuration, a closed loop control is provided which influences the size of the gob of molten glass according to the measurement of the previous end position of the plunger.

The glass forming machine is typically configured for a constant operation in which in a first cycle a first glass gob is brought into the blank mould, a parison is formed and removed from the blank mould and subsequently, in a second cycle, a second glass gob is brought into the blank mould and so on. The size of the second glass gob is influenced by the end position of the plunger reached during operation in the first cycle. During operation in particular means during a previous operation cycle. In particular, the glass feeding device is configured to influence a size of a gob of molten glass brought into the blank mould based on the end position of the plunger which has been reached in a previous cycle. The glass feeding device is configured to successively produce single gobs of molten glass or groups of multiple gobs of molten glass, in particular simultaneously in time.

In one embodiment, the glass forming machine includes a memory for storing an end position range. The glass feeding device is configured to change the size of a gob of molten glass if an end position of the plunger previously reached during operation is not within a stored end position range. The size of the gob of molten glass is then changed such that, as a result of the change, the subsequently reached end position is within the range. In particular, the size of the subsequently produced gob of molten glass is changed with respect to the size of the previously produced gob of molten glass.

An end position range is a range of end positions of the plunger. The memory is in particular a non-volatile computer-readable memory. It may be configured to store at least one and in particular multiple end position ranges. It may be configured to store end positions or ranges measured by the measurement device. The glass forming machine may comprise an input device for inputting an end position range and/or an interface for receiving an end position range.

The memory is adapted for storing end position range during operation of the glass forming machine. It may be adapted for storing the range up to the next cycle and in particular for a plurality of cycles. The glass feeding device may be configured to calculate a trend based upon end positions of a plurality of previous cycles in order to improve the control. If a closed loop control is provided, it can be configured to compare the measurement of the previous end position of the plunger to the end position range stored in the memory.

Potential defects in the glass bottles can be avoided by keeping the end position of the plunger within a predefined range, such as a range of less than 12 mm, in particular less than 8 mm and more particularly less than 5 mm.

Instead of a range, a setpoint can also be provided. The movement of the plunger is then adjusted so that the setpoint value is always reached by the plunger, if possible.

The position of the plunger can be measured capacitively. Thus, one end of the plunger can be in a pipe when the plunger has reached its end position. The tube and the plunger then form a capacitance. The capacity then depends on the end position reached. The capacity is therefore a measure of the end position reached. By measuring the capacity, the end position reached can be determined.

In one embodiment, the glass feeding device comprises a feeder bowl adapted for containing molten glass, said feeder bowl having a discharge orifice. The glass feeding device further comprises a movable needle and an electrical motor adapted to move the needle with respect to the discharge orifice. The glass feeding device further comprises a control device which is configured to control the movement of the needle, a sensor for detecting an information associated with a position of the needle in order to control the movement of the needle, and a shear mechanism which is configured to divide a stream of molten glass emerging from the discharge opening into gobs of molten glass. A glass feeding device can comprise more than one discharge orifice and more than one movable needle. Each needle may have its own sensor and its own electrical motor.

A needle is an elongate element. It is in particular made of heat-resistant material such as ceramic in order to resist molten glass. It can be moved with respect to the discharge orifice. In particular, it can be moved along its longitudinal direction. Typically, it can be moved within the discharge opening. This serves for at least partly closing or opening the discharge orifice in order to reduce or increase the stream of molten glass. The needle can be moved vertically. However, the needle does not need to be moved vertically. Even a horizontal movement is possible.

The control device may be operatively coupled with the motor in order to control the movement of the needle by controlling the movement of the motor. It may be configured to control the movement of the needle depending on the end position of the plunger. The end position of the plunger may be a previous end position, i.e. an end position of a previous cycle. The needle may be movable toward and away from the discharge orifice by the electrical motor. The information associated with a position of the needle may be a position of the needle itself, e.g. a distance of the needle tip to a certain element, a position of a part of the electrical motor, or a position of a part of a mechanical transmission device between the electrical motor and the needle. In other words, the sensor serves detecting a position of the needle in a direct or indirect way.

The shear mechanism subdivides the stream of molten glass which may have e.g. a honey-like consistency into portions called gobs which form the basis for producing the parisons in the blank side.

By providing a sensor, the movement of the needle during operation can be controlled quickly and precisely. This makes it possible to influence very precisely the shape of the glass stream that emerges from the discharge orifice and/or the size of the gobs of molten glass. In particular, it is possible to continuously and precisely change the diameter of the glass stream, i.e. to enlarge and reduce it. This makes it possible to divide the glass stream very precisely by dividing the glass stream as soon as its diameter is reduced, e.g. in or close to the moment with the most reduced diameter. Overall, this makes it possible to adjust the volume of a gob of molten glass very precisely and continuously to the size of the cavity during operation of the glass forming machine. In the course of time, the size of the gob of molten glass is thus changed. In contrast to the state of the art known from US 2020/0055763 A1, the aim of the invention is therefore to adapt the size of the gob of molten glass to the volume of the cavity. This ensures that the permissible tolerance range for a blank mould is much larger than the tolerance range that is possible according to the state of the art. During operation, the size of a cavity in a blank mould changes, for example due to burn-out. This change can be followed very precisely and quickly by the invention. Therefore, a blank mould can be used for a very long time before it has to be replaced or repaired. It is true that the provision of a sensor and an associated control device that receives the sensor data initially increases the technical effort. Overall, however, a significant reduction of the technical effort is achieved for the reasons mentioned above.

In one embodiment, the control device is configured to control the movement of the needle such that the size of a gob of molten glass depends on the end position previously reached during operation. Thus, a particularly precise control can be achieved.

In a further embodiment, the control device is configured to increase and decrease the diameter of the stream in an oscillating and/or wave-like manner.

In one configuration, the diameter of the stream is continuously increased and decreased and/or increased and decreased in an oscillating and/or wave-like manner such as e.g. a sinusoidal manner. Thus, the stream can be alternately and continuously increased and decreased. In particular, the needle is moved continuously. It may be moved in a sinusoidal curve over time. In order to influence the size of a gob of molten glass, the needle can be moved such that a central position of the sinusoidal curve is shifted upwards or downwards. The amplitude and/or frequency of the oscillation may remain constant. The glass feeding device can be configured such that one or more of the above functions can be performed.

In one embodiment of the invention, the electrical motor is different from a stepper motor. A stepper motor is a motor that is often used to drive a needle. However, a stepper motor is a relatively slow motor. It is therefore advantageous to use a motor that is not a stepper motor in order to operate the glass forming machine at high speed. Therefore, the electrical motor is, for example, a brushless DC motor, a linear motor, or a synchronous or an asynchronous electrical motor. This leads to a faster and more reliable adjustment and, thus, to a constant high quality of parisons.

In one embodiment of the invention, the sensor is configured to detect a rotor position of the motor. The position and movement of a needle can thus be continuously detected in a technically simple and reliable manner. This allows the glass flow to be shaped more precisely. The service life of blank moulds and the permissible tolerance range can thus be increased.

In a further embodiment, the sensor is a resolver or an encoder like an incremental encoder. These sensors are reliable and cost-effective and particularly suited for the detection of the needle position.

In one embodiment of the invention, the drive for the plunger is configured so that the movement of the plunger into the blank mould can be stopped by molten glass. The movement of the plunger is therefore stopped as soon as the cavity is completely filled with molten glass. The movement of the plunger is therefore stopped as soon as the cavity is completely filled with glass and the part of the plunger that has been moved into the cavity. The movement of the plunger is thus stopped by the occurrence of a sufficiently large counter force. This helps to achieve the optimal end position and, thus, increases the quality of the parisons.

Each plunger can come from below moving into the corresponding blank mould. The ascending movement of the plungers can pierce gobs of molten glass when molten gobs are within the blank moulds. The blank side of the glass forming machine can form parisons in this way. After forming parisons, the plungers can be moved downwards out of the blank moulds. The plungers do not necessarily have to be moved into the blank moulds from below. For example, a reverse direction is also possible.

Each blank mould may have an upper opening which is closed by a baffle during the moulding of a parison. After forming a parison, the closed opening can be opened by removing the baffle.

Each blank mould may have two movable mould halves. The two movable mould halves can be moved back and forth between an open position and a closed position. During moulding a parison, the two mould halves are in their closed position. After forming the parison, the two mould halves can be moved to their open position.

The blank side may have neck rings. Each neck ring can be below a blank mould. Each plunger can come from below through a neck ring moving into the corresponding blank mould. Thus, each plunger may reach through a neck ring. A neck ring can hold a parison.

The glass forming machine may have a blow station for forming a container from the parisons. The container can be a glass bottle. The blow station may be able to form finished products out of the parisons. The forming of a parison into a finished product may be accomplished in three phases: stretching of the parison under its own weight; inflation of the stretched parison; and extraction of the finished product. A finished product is a container like a bottle. The glass forming machine can be part of a Press and Blow (PB) machine and in particular a Narrow Neck Press and Blow (NNPB) machine.

The glass forming machine may have an invert mechanism. The invert mechanism can transfer the parisons from the blank side to the blow station. The transfer can take place through a rotational movement. When the parisons are only held by the neck rings, the invert mechanism can transfer the neck rings together with the parisons to the blow station. This is done, for example, by turning the neck rings 180 degrees about a horizontal axis. Each neck ring can be attached to a shaft respectively an axis via an arm so that it can be rotated appropriately. When a shaft is rotated 180 degrees, the corresponding neck ring is transported from the blank side to the blow station and is rotated 180 degrees.

The blow station can comprise blow moulds. Each blow mould may have two blow mould halves. The blow station may have a blowing device to blow up a parison when the parison is in a blow mould. The blow station may include a suction device to assist blowing. A blow mould may include a double wall, leaving a gap between the two walls of the double wall. The inner wall of the double wall can be permeable to air.

In one configuration, the blank side may include at least two blank moulds and at least two plungers. Each plunger can be moved into one of the blank moulds up to an end position and out of the one of the blank moulds up to a start position. There is a drive for each plunger so that the plungers can be moved independently to end positions.

An end position can be continuously readjusted. Therefore, an end position can change over time. The end positions can be adjusted independently. A first end position can therefore be readjusted and consequently changed. This does not mean that a second, different end position must also be changed. Because each plunger has its own drive, the end positions can be changed independently. This is not possible if two plungers are connected to each other so that they can be moved together with only one drive. Because the end positions can be changed independently, the end positions can be individually adapted to blank moulds. In other words, each end position can be set in relation to an individual blank mould.

Individual cavities may have different volumes due to tolerances in manufacturing or repair. Because end positions can be individually set and customized, blank moulds require less frequent repair or replacement.

The provision of a plurality of drives initially increases the technical effort. Overall, however, the technical effort is still lower compared with the case that there is only one drive for at least two plungers because the maintenance effort can be reduced.

In a further embodiment, the blank side includes at least one section for simultaneously forming a plurality of parisons from gobs of molten glass. The section comprises at least two plungers and a at least two blank moulds. Each plunger of a section being associated with one blank mould of the section. Each plunger can be moved into the respective blank mould up to an end position. Each plunger can be moved out of the respective blank mould up to a start position. The glass forming machine includes for each section at least two needles and two discharge orifices, each of them are configured to feed a gob of molten glass into a respective blank mould. The glass feeding device may comprise a system of channels. The gobs of molten glass can be directed into the blank moulds via the channels. The glass forming machine includes for each section a plurality of measuring devices, each measuring device being associated with one of the plungers of the section and configured to measure the end position of the respective plunger. The glass feeding device is configured such that the size of a gob of molten glass brought into one of the blank moulds of a section depends on the end position of the said plunger previously reached during operation. In particular, the glass forming machine comprises at least two sections. Each section is configured for simultaneously forming a plurality of parisons.

In other words, each needle of glass feeding device of a section can be operated individually in an embodiment of the invention. It can be influenced individually in order to optimize the size of the gob of molten glass brought into the respective blank mould separately. This allows to control the amount of glass delivered to each individual cavity. A much bigger range in tolerance and thus a much longer lifetime of the blank mould volumes is acceptable which significantly reduces costs.

All measuring devices can be incorporated into one joint measuring device in which measurement operations of all plungers of a section are at least partly performed in a centrally pooled manner.

In a further embodiment, each glass feeding device comprises at least one discharge orifice, at least one movable needle, at least one electrical motor adapted to move the needle with respect to the discharge orifice, at least one control device which is configured to control the movement of the needle, and at least one sensor for detecting a position of the needle in order to control the movement of the needle. In particular, the control device is configured to control the movement of each needle such that the size of a gob of molten glass brought into one of the blank moulds of a section depends on the end position of the plunger associated with said blank mould previously reached during operation.

The feeder bowl can be adapted to provide molten glass to each needle and a corresponding discharge orifice of the feeding device. It may have as many discharge orifices as plungers and blank moulds are provided in this section. All control devices can be incorporated into one joint control device in which control operations of all plungers and blank moulds of this section are performed in a centrally pooled manner. One or several shear mechanisms can be provided for dividing the streams of molten glass emerging from the feeder bowl into gobs. This embodiment leads to a high production capacity while maintaining a high quality.

A second aspect of the invention is a method for manufacturing formed glass parisons, in particular with a glass forming machine according to the invention. The method comprises forming a first parison from a first gob of molten glass by means of a blank side having a plunger and a blank mould. This step includes bringing the first gob of molten glass into the blank mould by means of a glass feeding device and moving the plunger up to the end position. The method further comprises measuring the end position of the plunger by means of a measuring device. It further comprises forming a second parison from a second gob of molten glass by means of the blank side. This includes bringing the second gob of molten glass into the blank mould by means of the glass feeding device and moving the plunger up to the end position such that the size of the second gob of molten glass depends on the measured end position.

In particular, the glass feeding device is influenced by the measured end position of the plunger such that the size of the second gob of molten glass depends on the end position. Typically, the size of the second gob is smaller or larger than the size of the first gob. The measured end position can be compared to a range for the end position. The configurations, features and advantages described above in connection with the aspect of the invention described at the beginning also apply to this aspect of the invention.

In one embodiment, a needle of the glass feeding device is moved with respect to the discharge orifice by an electrical motor previously to and/or during bringing the second gob of molten glass into the blank mould such that the size of the second gob of molten glass depends on the measured end position.

In a further embodiment, the movement of the needle is controlled by means of a control device based on an information associated with a position of the needle detected by a sensor.

In a further embodiment, in a plurality of blank sides a plurality of first parisons are formed from a plurality of first gobs of molten glass. Subsequently, in said plurality of blank sides, a plurality of second parisons are formed from a plurality of second gobs of molten glass such that the size of each of the second gobs of molten glass depends on the previously measured end position of the plunger of the respective blank side during formation of the first gobs of molten glass.

The invention is further illustrated with the aid of the following examples, with reference to the appended drawings in which:
- Fig. 1: is a schematic representation of a blank side at the beginning of the production of a parison;
- Fig. 2: is a schematic representation of the blank side during the production of a parison;
- Fig. 3: is a schematic representation of the blank side at the end of the production of a parison;
- Fig. 4: is a schematic representation of an invert mechanism at the beginning of a transfer of the parison;
- Fig. 5: is a schematic representation of the invert mechanism at the end of a transfer of the parison;
- Fig. 6: is a schematic representation of a blow station at the beginning of the production of a glass bottle;
- Fig. 7: is a schematic representation of the blow station at the end of the production of the glass bottle;
- Fig. 8: is a schematic representation of the glass bottle:
- Fig. 9: is a schematic representation of a glass feeding device and a plurality of blank moulds; and
- Fig. 10: is a schematic representation of another configuration of the glass feeding device.

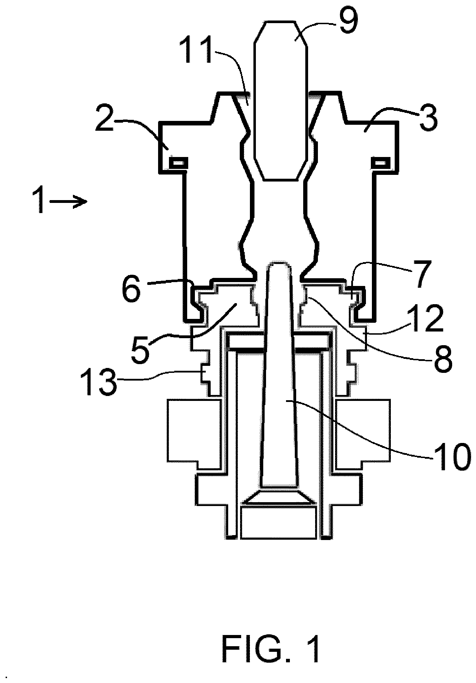

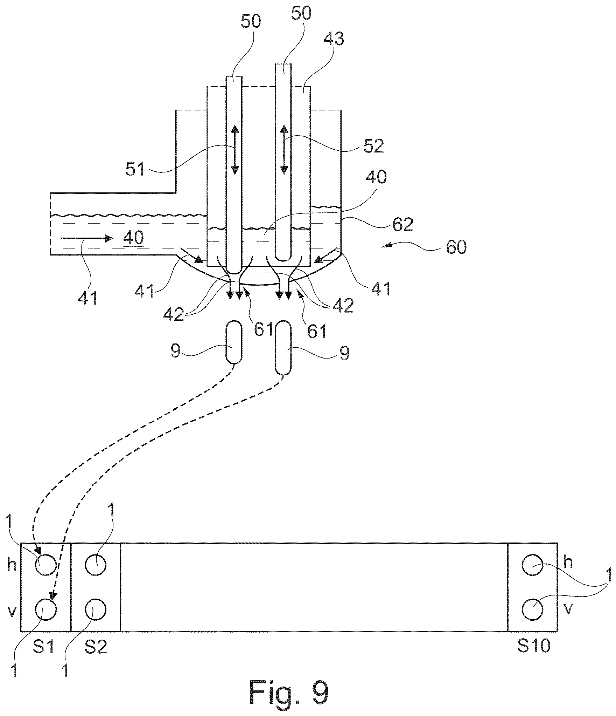

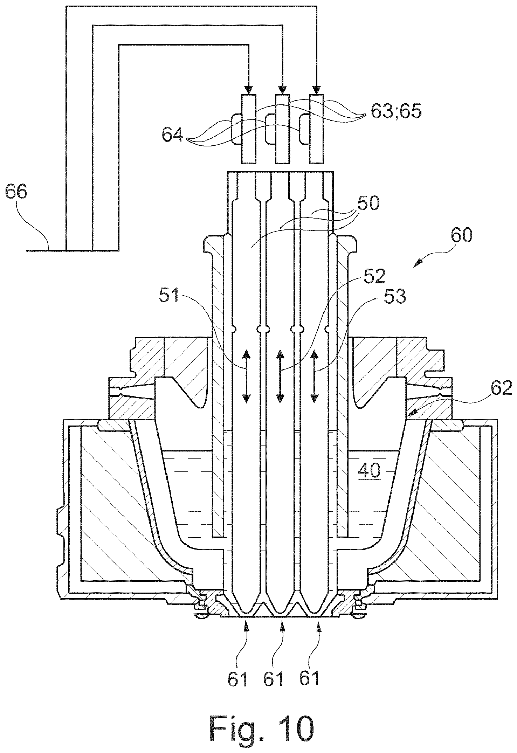

The figures 1 to 8 illustrate the production of a glass bottle. Figures 9 and 10 relate to the glass feeding device and to details of the method according to the invention.

Fig. 1 refers to a blank side of a glass forming machine. Fig. 1 shows one blank mould 1 of the blank side. The blank mould 1 consists of two blank mould halves 2 and 3. The blank mould halves 2 and 3 are in a closed position. The two blank mould halves 2 and 3 are closed up on a neck ring 5 at the lower end of the blank mould 1.

There is an annular recess 6 formed by the two halves 2, 3 when the two halves 2 and 3 are in their closed position. The neck ring 5 comprises an upper annular projection 7. The upper annular projection 7 extends into the annular recess 6 when the two halves 2, 3 are in their closed position. In the closed position of the two halves 2, 3, these are then fixed by positive locking with the neck ring 5.

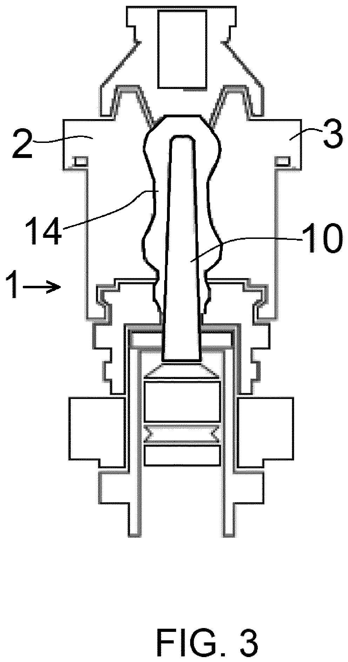

The inner wall of the neck ring 5 can have a bulge 8. A parison can be held by this bulge 8, as shown in figure 3.

As shown in figure 1, a gob of molten glass 9 can be brought into the blank mould from above by means of a glass feeding device which is not shown here. This can be in particular assisted by gravity.

The blank side includes a plunger 10. According to figure 1, the plunger 10 is in a start position being a retracted position. The plunger 10 reaches through the neck ring 5. The plunger 10 tapers in the direction of the blank mould 1. When the plunger 10 is in the start position, the plunger 10 ends close to the bottom of the blank mould 1 as well as above the bottom of the blank mould 1 as shown in figure 1.

The blank mould 1 has an upper opening 11 on the upper side such that the glass feeding device can bring a gob of molten glass 9 into the blank mould 1.

The neck ring 5 can include a flange 12 on which the blank mould 1 can rest. Further, the neck ring 5 can include a lower annular projection 13 in order to be able to connect the neck ring 5 positively with an arm of an invert mechanism.

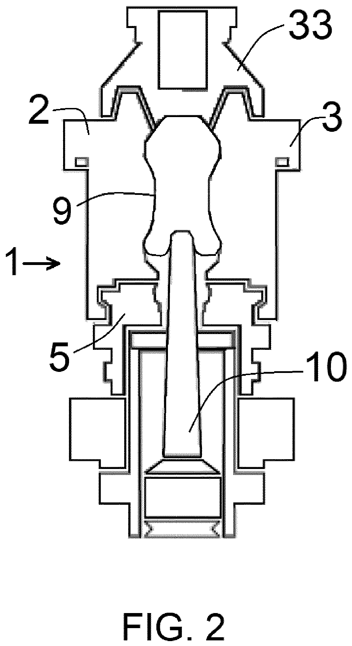

As soon as the gob of molten glass 9 is completely within the blank mould 1, the upper opening 11 of the blank mould 1 is closed by a baffle 33 as shown in figure 2. After the upper opening 11 has been closed, the plunger 10 is moved upwards, i.e. further into the blank mould 1, towards its end position or extended position. This upward movement of the plunger 10 is illustrated in figures 2 and 3. The gob of molten glass 9 thus becomes a parison 14. The parison 14 is shown in figure 3. Here, the plunger is in its end position. Then, the cavity of the blank mould is completely filled with glass.

Once the parison 14 has been formed and in particular at least partly solidified, the blank mould 1 is opened. The baffle 33 and the two halves 2 and 3 of the blank mould 1 are removed from the parison 14. The parison 14 remains on the neck ring 5. Further, the parison 14 is held by the bulge 8 of the neck ring 5. For example, the baffle 33 is pulled out of the parison 14. After that the two halves will be moved away.

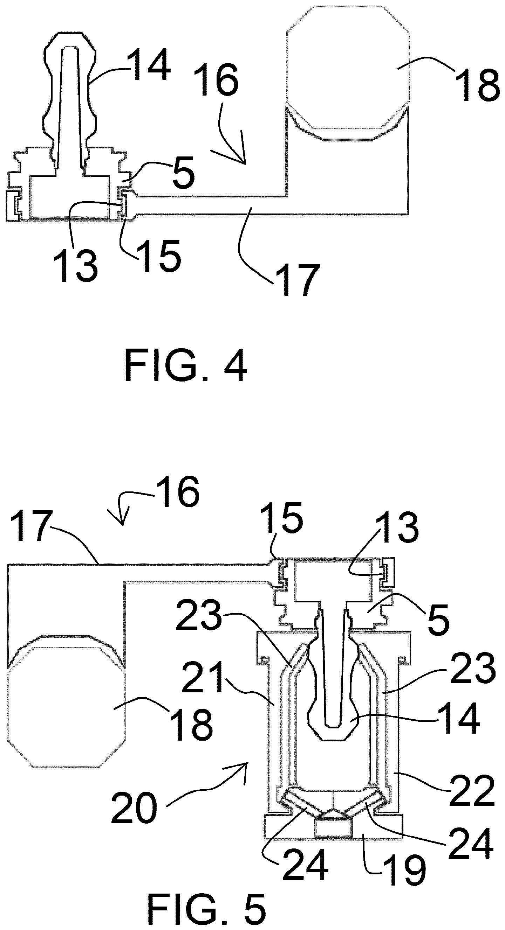

A gripper 15 of an invert mechanism 16 then grips for example the lower projection 13 of the neck ring 5 as illustrated in figure 4. The gripper 15 is attached to an L-shaped arm 17 of the invert mechanism 16. The L-shaped arm 17 can be rotated about one axis 18. The rotation is done by means of a motor. The motor is not shown in figure 4.

After the gripper 15 has gripped the neck ring 5, the L-shaped arm 17 is rotated 180° around the axis 18. Figure 5 shows this rotated state. The parison 14 is thus brought to a base 19 of a blow station 20. The parison 14 is then located above this base 19.

The blow station 20 comprises a blow mould which consists of two blow mould halves 21 and 22. After the parison 14 has been brought to the base 19, the two halves 21 and 22 are moved towards the parison 14. Subsequently, the parison 14 is inside the blow mould 21, 22 as shown in figure 5.

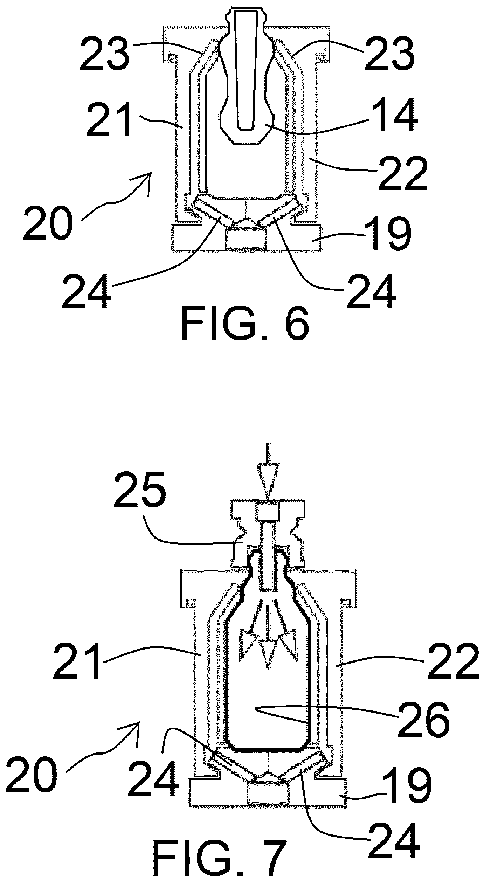

When the parison 14 is inside the blow mould 21, 22, the neck ring 5 is removed. To do this without damaging the parison 14, the neck ring 5 also consists of two halves. The two halves of the neck ring 5 can therefore be removed from each other to remove the neck ring 5 from the parison 14 as illustrated in figure 6.

The two halves 21 and 22 consist of a double wall. A gap 23 remains between the two walls of the double wall. The inner wall of the double wall is perforated or otherwise air-permeable. The base 19 comprises ducts 24 through which air can be sucked out of each gap 23.

A blow head 25 is then placed on the two halves 21 and 22 of the blow mould. Air is then pumped through the blow head 25, inflating the parison into a bottle 26, as shown in figure 7. Inflating can be supported by sucking air through the ducts 24.

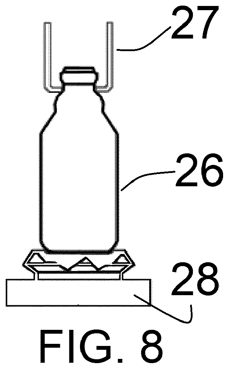

After the bottle 26 has been inflated, the blow head as well as the two halves 21 and 22 of the blow mould are removed. The bottle 26 can then be gripped by a take out 27 and placed on a conveyor belt 28, for example, as illustrated in figure 8.

Figure 9 schematically shows a glass feeding device 60, also referred to as feeder, and a plurality of blank moulds 1. Figure 9 also refers to the blank side. The glass feeding device comprises a feeder bowl 62 which contains molten glass 40. On the lower side it comprises two discharge orifices 61 to simultaneously discharge two streams 42 of molten glass 40. On the lower side of the feeder bowl 62, the discharge orifices are integrated into an orifice ring. On the left hand side, the feeder bowl 62 is connected to a furnace (not shown here) from which molten glass is guided to the discharge orifices 61 as indicated by arrows 41 and 42. Below the discharge orifices 61, the glass feeding device 60 comprises a shear mechanism (not shown here) for dividing the resulting streams 42 of molten glass 40 emerging from the feeder bowl 62 into separate gobs of molten glass 9 as schematically depicted. The shear mechanism may comprise a shear blade for cutting individual gobs.

Within the feeder bowl 62 there is a tube 43 made of ceramic material. By upward or downward movement of the tube 43, the streams 41 of molten glass 40 can be increased or decreased. This affects all streams 41 in the same way.

In order to control the size of the streams 42 emerging from the discharge orifices 61, the glass feeding device 60 comprises two needles 50 each of which is associated with one discharge orifice 61. Each of the needles 50 is individually movable with respect to the respective discharge orifice 61, as indicated by arrows 51 and 52. Each needle 50 can be moved upwards and downwards along its respective longitudinal direction. This movement individually influences the size of the respective stream 42 of molten glass emerging from the respective discharge orifice 61 and, thus, the size of the gob of molten glass 9.

Below the feeding device 60, a set of blank moulds 1 is schematically shown. The set shown here in exemplary fashion comprises two rows h, v, and ten sections S1, S2, ... S10 in the form of columns, each section comprising two blank moulds and two associated plungers. The respective plungers are not shown here. The glass feeding device comprises two discharge orifices 61 and two movable needles 50. The feeder bowl 62 is adapted to provide molten glass 40.

During operation, the gobs of molten glass 9 emerging from the discharge orifice 61 shown on the right hand side are fed into blank moulds 1 located in the front row v and the gobs of molten glass 9 emerging from the discharge orifice 61 shown on the left hand side are brought into blank moulds 1 of the back row h. Channels can be provided to guide the gobs of molten glass 9 into the cavities of the blank moulds 1. Firstly, gobs of molten glass 9 are brought into the blank moulds 1 of the first section S1, as indicated by the dotted arrows. Subsequently, gobs of molten glass 9 are brought into the blank moulds 1 if the second section S2. This is repeated until all blank moulds 1 are filled with gobs of molten glass 9. The channels can be adjusted to achieve this.

After filling the blank moulds 1 of the first section S1, the size of the gobs of molten glass 9 can be influenced by moving the needles upwards or downwards for the next section. The glass feeding machine is configured such that the size of a gob of molten glass 9 depends on the end position previously reached during operation. To this end, a measuring device (not shown here) measures the end position of the plunger, e.g. of the blank moulds 1 of the first section S1, and the needles 50 are moved along arrows 51, 52. In doing so they are controlled such that the end position of the plunger previously reached during operation of the glass forming machine is used. This is in order to influence the size of the gobs of molten glass 9. The position of a needle 50 may be readjusted after each production cycle. Before producing a gob for a specific section, the position of a needle 50 may be readjusted after each production cycle.

In one configuration, the memory of the glass forming machine stores end positions measured in each blank mould 1 of the shown set of blank moulds 1 and after bringing gobs of molten glass 9 into each blank mould 1 of the set and after releasing the produced parisons from the blank moulds 1 and before bringing subsequent gobs of molten glass 9 into each of the blank moulds 1, the glass feeding device moves the needles 50 in order to influence the size of the subsequently produced gobs of molten glass 9 based upon the stored end positions of the respective plungers. In other words, the gob sizes can be controlled individually and continuously from cut to cut. Thus, cavities having different sizes, e.g. due to repeated reprocessing, can be utilized in an optimal manner. In particular, the glass feeding device is configured to detect and store a movement profile of the plunger. The shear mechanism may be configured to divide the streams 42 of molten glass 40 at an earlier or later point of time with respect to the movement of the needle 50.

A glass feeding device can also have more than two discharge orifices 61 and more than two needles 50. So there can also be three needles 50 and three discharge orifices 61 or four needles 50 and four discharge orifices 61 and so on.

Figure 10 schematically shows another configuration of the glass feeding device 60 in a detailed manner. In contrast to the glass feeding device 60 shown in figure 9, it comprises three discharge orifices 61 and three needles 50 associated with the respective discharge orifices 61. Each needle is connected to an electrical motor 63, a sensor 65 and a control device 64. Each of the needles 50 is movable individually with respect to the respective discharge orifice 61, as indicated by arrows 51, 52 and 53. This is realized by means of the electrical motor 63 being controlled by the control device 64 which uses information regarding the position of the needle 50 detected by the sensor 65. Each group of electrical motor 63, control device 64 and sensor 50 is connected to a central power and/or control unit (not shown) by an electrical and/or data connection 66.

### List of reference signs

| | |
|---|---|
| blank mould | 1 |
| blank mould halves | 2, 3 |
| neck ring | 5 |
| annular recess | 6 |
| upper annular projection | 7 |
| bulge | 8 |
| gob of molten glass | 9 |
| plunger | 10 |
| upper opening | 11 |
| flange | 12 |
| lower annular projection | 13 |
| parison | 14 |
| gripper | 15 |
| invert mechanism | 16 |
| L-shaped arm | 17 |
| axis | 18 |
| base | 19 |
| blow station | 20 |
| blow mould halves | 21, 22 |
| gap | 23 |
| ducts | 24 |
| blow head | 25 |
| bottle | 26 |
| take out | 27 |
| conveyor belt | 28 |
| baffle | 33 |
| molten glass | 40 |
| arrow | 41 |
| stream | 42 |
| tube | 43 |
| needle | 50 |
| arrows | 51, 52, 53 |
| glass feeding device | 60 |
| discharge orifice | 61 |
| feeder bowl | 62 |
| electrical motor | 63 |
| control device | 64 |
| sensor | 65 |
| electrical and/or data connection | 66 |
| sections | S1, S2, ... S10 |
| front row | v |
| back row | h |

## Claims

1. Glass forming machine which includes a blank side for forming parisons (14) from gobs of molten glass (9); the blank side includes a plunger (10) and a blank mould (1); the plunger (10) can be moved into the blank mould (1) up to an end position; the plunger (10) can be moved out of the blank mould (1) up to a start position; the glass forming machine includes a glass feeding device (60) which is configured to bring a gob of molten glass (9) into the blank mould (1); the glass forming machine includes a measuring device which is configured to measure the end position of the plunger (10), **characterized in that** the glass feeding device (60) is configured such that the size of a gob of molten glass (9) depends on the end position previously reached during operation.

2. Glass forming machine according to the preceding claim, wherein the glass forming machine includes a memory for storing an end position range or a set point value, the glass feeding device (60) is configured to change the size of a gob of molten glass (9) if an end position of the plunger (10) previously reached during operation is not within a stored end position range or if an end position didn't reach the set point value, the size of the gob of molten glass (9) then being changed such that, as a result of the change, the subsequently reached end position is within the range or reaches the set point value.

3. Glass forming machine according to one of the preceding claims, wherein the glass feeding device (60) comprises
- a feeder bowl (62) adapted for containing molten glass (40), said feeder bowl (62) having a discharge orifice (61),
- a movable needle (50),
- an electrical motor (63) adapted to move the needle (50) with respect to the discharge orifice (61),
- a control device (64) which is configured to control the movement of the needle (50),
- a sensor (65) for detecting an information associated with a position of the needle (50) in order to control the movement of the needle (50), and
- a shear mechanism which is configured to divide a stream (42) of molten glass (40) emerging from the discharge opening (61) into gobs of molten glass (9).

4. Glass forming machine according to the preceding claim, wherein the control device (64) is configured to control the movement of the needle (50) such that the size of a gob of molten glass (9) depends on the end position previously reached during operation.

5. Glass forming machine according to claim 3 or 4, wherein the control device (64) is configured to increase and decrease the diameter of the stream (42) in an oscillating and/or wave-like manner.

6. Glass forming machine according to claim 3 or 4 or 5, wherein the electrical motor (63) is different from a stepper motor.

7. Glass forming machine according to the preceding claim, wherein the electrical motor (63) is a brushless DC motor or a synchronous or an asynchronous electrical motor or a linear motor.

8. Glass forming machine according to claim 3 or 4 or 5 or 6 or 7, preceding claims, wherein the sensor (65) is configured to detect a rotor position of the electrical motor (63).

9. Glass forming machine according to claim 3 or 4 or 5 or 6 or 7 or 8, wherein the sensor (65) is a resolver or an encoder like an incremental encoder.

10. Glass forming machine according to one of the preceding claims, wherein the blank side includes at least one section for simultaneously forming a plurality of parisons (14) from gobs of molten glass (9), the section comprising at least two plungers (10) and a at least two blank moulds (1); each plunger (10) of a section being associated with one blank mould (1) of the section; each plunger (10) can be moved into the respective blank mould (1) up to an end position; each plunger (10) can be moved out of the respective blank mould (1) up to a start position; the glass forming machine including for each section at least two needles (50) and two discharge orifices (61), each discharge orifices (61) being associated with one of the blank moulds of the section and configured to bring a gob of molten glass (9) into the respective blank mould (1); the glass forming machine including a plurality of measuring devices, each measuring device being associated with one of the plungers (10) of the section and configured to measure the end position of the respective plunger (10), wherein the glass feeding device (60) is configured such that the size of a gob of molten glass (9) brought into one of the blank moulds (1) of a section depends on the end position of the plunger (10) associated with said blank mould (1) previously reached during operation, wherein, in particular, the glass forming machine comprises at least two sections.

11. Glass forming machine according to the preceding claim, wherein each glass feeding device (60) comprises a discharge orifice (61), a movable needle (50), an electrical motor (63) adapted to move the needle (50) with respect to the discharge orifice (61), a control device (64) which is configured to control the movement of the needle (50), and a sensor (65) for detecting a position of the needle (50) in order to control the movement of the needle (50),
wherein, in particular, the control device (64) is configured to control the movement of the needle (50) such that the size of a gob of molten glass (9) brought into one of the blank moulds (1) of a section depends on the end position of the plunger (10) associated with said blank mould (1) previously reached during operation.

12. Method for manufacturing formed glass parisons (14), in particular with a glass forming machine according to one of the previous claims, comprising
- Forming a first parison (14) from a first gob of molten glass (9) by means of a blank side having a plunger (10) and a blank mould (1), including bringing the first gob of molten glass (9) into the blank mould (1) by means of a glass feeding device (60) and moving the plunger (10) up to the end position,
- Measuring the end position of the plunger (10) by means of a measuring device,
- Forming a second parison (14) from a second gob of molten glass (9) by means of the blank side, including bringing the second gob of molten glass (9) into the blank mould (1) by means of the glass feeding device (60) and moving the plunger (10) up to the end position, wherein the glass feeding device (60) is influenced by the measured end position of the plunger (10) such that the size of the second gob of molten glass (9) depends on the measured end position.

13. Method according to the preceding claim, wherein a needle (50) of the glass feeding device (60) is moved with respect to the discharge orifice (61) by an electrical motor (63) previously to and/or during bringing the second gob of molten glass (9) into the blank mould (1).

14. Method according to the preceding claim, wherein the movement of the needle (50) is controlled by means of a control device (64) based on an information associated with a position of the needle (50) detected by a sensor (65).

15. Method according to one of the three preceding claims, wherein in a plurality of blank sides a plurality of first parisons (14) are formed from a plurality of first gobs of molten glass (9) and subsequently, in said plurality of blank sides, a plurality of second parisons (14) are formed from a plurality of second gobs of molten glass (9) such that the size of each of the second gobs of molten glass (9) depends on the previously measured end position of the plunger (10) of the respective blank side during formation of the first gobs of molten glass (9).

## Patentansprüche

1. Glasformmaschine, die eine Vorformseite zum Formen von Külbeln (14) aus Posten geschmolzenen Glases (9) enthält; die Vorformseite enthält einen Stößel (10) und eine Vorform (1); der Stößel (10) kann in die Vorform (1) hinein bis zu einer Endposition bewegt werden; der Stößel (10) kann aus der Vorform (1) heraus bis zu einer Startposition bewegt werden; die Glasformmaschine enthält eine Glaszufuhrvorrichtung (60), die dazu eingerichtet ist, einen Posten geschmolzenen Glases (9) in die Vorform (1) zu bringen; die Glasformmaschine enthält eine Messvorrichtung, die dazu eingerichtet ist, die Endposition des Stößels (10) zu messen, **dadurch gekennzeichnet, dass** die Glaszufuhrvorrichtung (60) so konfiguriert ist, dass die Größe eines Postens geschmolzenen Glases (9) von der zuvor während des Betriebs erreichten Endposition abhängt.

2. Glasformmaschine gemäß dem vorhergehenden Anspruch, wobei die Glasformmaschine einen Speicher zum Speichern eines Endpositionsbereichs oder eines festgelegten Sollwerts enthält, die Glaszufuhrvorrichtung (60) dazu eingerichtet ist, die Größe eines Posten geschmolzenen Glases (9) zu ändern, wenn eine zuvor während des Betriebs erreichte Endposition des Stößels (10) nicht innerhalb eines gespeicherten Endpositionsbereichs liegt oder wenn eine Endposition den festgelegten Sollwert nicht erreicht hat, wobei die Größe des Postens geschmolzenen Glases (9) dann so verändert wird, dass durch die Veränderung die anschließend erreichte Endposition innerhalb des Bereiches liegt oder den festgelegten Sollwert erreicht.

3. Glasformmaschine gemäß einem der vorhergehenden Ansprüche, wobei die Glaszufuhrvorrichtung (60) umfasst
- eine Zuführungsschüssel (62), die zur Aufnahme von geschmolzenem Glas (40) geeignet ist, wobei die Zuführungsschüssel (62) eine Auslassöffnung (61) aufweist,
- eine bewegliche Nadel (50),
- einen Elektromotor (63), der dazu eingerichtet ist, die Nadel (50) in Bezug zu der Auslassöffnung (61) zu bewegen,
- eine Steuereinrichtung (64), die dazu eingerichtet ist, die Bewegung der Nadel (50) zu steuern,
- einen Sensor (65) zum Detektieren einer Information, die einer Position der Nadel (50) zugeordnet ist, um die Bewegung der Nadel (50) zu steuern, und
- einen Schermechanismus, der dazu eingerichtet ist, einen Strom (42) geschmolzenen Glases (40), der aus der Auslassöffnung (61) austritt, in Posten geschmolzenen Glases (9) zu unterteilen.

4. Glasformmaschine gemäß dem vorhergehenden Anspruch, wobei die Steuereinrichtung (64) dazu eingerichtet ist, die Bewegung der Nadel (50) so zu steuern, dass die Größe eines Postens geschmolzenen Glases (9) von der zuvor während des Betriebs erreichten Endposition abhängt.

5. Glasformmaschine gemäß Anspruch 3 oder 4, wobei die Steuereinrichtung (64) dazu eingerichtet ist, den Durchmesser des Stroms (42) in einer oszillierenden und/oder wellenförmigen Weise zu vergrößern und zu verkleinern.

6. Glasformmaschine gemäß Anspruch 3 oder 4 oder 5, wobei der Elektromotor (63) ein anderer ist als ein Schrittmotor.

7. Glasformmaschine gemäß dem vorhergehenden Anspruch, wobei der Elektromotor (63) ein bürstenloser Gleichstrommotor oder ein synchroner oder ein asynchroner Elektromotor oder ein Linearmotor ist.

8. Glasformmaschine gemäß Anspruch 3 oder 4 oder 5 oder 6 oder 7, wobei der Sensor (65) dazu eingerichtet ist, eine Rotorposition des Elektromotors (63) zu detektieren.

9. Glasformmaschine gemäß Anspruch 3 oder 4 oder 5 oder 6 oder 7 oder 8, wobei der Sensor (65) ein Resolver oder ein Encoder wie ein Inkremental-Encoder ist.

10. Glasformmaschine gemäß einem der vorhergehenden Ansprüche, wobei die Vorformseite mindestens einen Abschnitt zum gleichzeitigen Formen einer Vielzahl von Külbeln (14) aus Posten geschmolzenen Glases (9) enthält, wobei der Abschnitt mindestens zwei Stößel (10) und mindestens zwei Vorformen (1) umfasst; wobei jeder Stößel (10) eines Abschnitts einer Vorform (1) des Abschnitts zugeordnet ist; jeder Stößel (10) kann in die jeweilige Vorform (1) hinein bis zu einer Endposition bewegt werden; jeder Stößel (10) kann aus der jeweiligen Vorform (1) heraus bis zu einer Startposition bewegt werden; die Glasformmaschine enthält für jeden Abschnitt mindestens zwei Nadeln (50) und zwei Auslassöffnungen (61), wobei jede Auslassöffnung (61) einer der Vorformen des Abschnitts zugeordnet ist und dazu eingerichtet ist, einen Posten geschmolzenen Glases (9) in die jeweilige Vorform (1) zu bringen; wobei die Glasformmaschine eine Vielzahl von Messvorrichtungen enthält, wobei jede Messvorrichtung einem der Stößel (10) des Abschnitts zugeordnet und dazu eingerichtet ist, die Endposition des jeweiligen Stößels (10) zu messen, wobei die Glaszufuhrvorrichtung (60) so konfiguriert ist, dass die Größe eines in eine der Vorformen (1) eines Abschnitts eingebrachten Posten geschmolzenen Glases (9) von der Endposition des der Vorform (1) zugeordneten Stößels (10) abhängt, die zuvor während des Betriebs erreicht wurde,
wobei insbesondere die Glasformmaschine mindestens zwei Abschnitte umfasst.

11. Glasformmaschine gemäß dem vorhergehenden Anspruch, wobei jede Glaszufuhrvorrichtung (60) eine Auslassöffnung (61), eine bewegliche Nadel (50), einen Elektromotor (63), der dazu eingerichtet ist, die Nadel (50) in Bezug zu der Auslassöffnung (61) zu bewegen, eine Steuereinrichtung (64), die dazu eingerichtet ist, die Bewegung der Nadel (50) zu steuern, und einen Sensor (65) zum Detektieren einer Position der Nadel (50) umfasst, um die Bewegung der Nadel (50) zu steuern, wobei insbesondere die Steuereinrichtung (64) dazu eingerichtet ist, die Bewegung der Nadel (50) so zu steuern, dass die Größe eines in eine der Vorformen (1) eines Abschnitts eingebrachten Posten geschmolzenen Glases (9) von der Endposition des der Vorform (1) zugeordneten Stößels (10) abhängt, die zuvor während des Betriebs erreicht wurde.

12. Verfahren zum Herstellen von geformten Glaskülbeln (14), insbesondere mit einer Glasformmaschine gemäß einem der vorhergehenden Ansprüche, umfassend
- Formen eines ersten Külbels (14) aus einem ersten Posten geschmolzenen Glases (9) mittels einer Vorformseite, die einen Stößel (10) und eine Vorform (1) aufweist, enthaltend Bringen des ersten Postens geschmolzenen Glases (9) in die Vorform (1) mittels einer Glaszufuhrvorrichtung (60) und Bewegen des Stößels (10) bis zur Endposition,
- Messen der Endposition des Stößels (10) mittels einer Messvorrichtung,
- Formen eines zweiten Külbels (14) aus einem zweiten Posten geschmolzenen Glases (9) mittels der Vorformseite, enthaltend Bringen des zweiten Postens geschmolzenen Glases (9) in die Vorform (1) mittels der Glaszufuhrvorrichtung (60) und des Bewegen des Stößels (10) bis zur Endposition, wobei die Glaszufuhrvorrichtung (60) durch die gemessene Endposition des Stößels (10) beeinflusst wird, so dass die Größe des zweiten Postens geschmolzenen Glases (9) von der gemessenen Endposition abhängt.

13. Verfahren gemäß dem vorhergehenden Anspruch, wobei eine Nadel (50) der Glaszufuhrvorrichtung (60) vor und/oder während des Bringens des zweiten Postens geschmolzenen Glases (9) in die Vorform (1) durch einen Elektromotor (63) in Bezug zu der Auslassöffnung (61) bewegt wird.

14. Verfahren gemäß dem vorhergehenden Anspruch, wobei die Bewegung der Nadel (50) basierend auf einer Information, die einer von einem Sensor (65) detektierten Position der Nadel (50) zugeordnet ist, mittels einer Steuereinrichtung (64) gesteuert wird.

15. Verfahren gemäß einem der drei vorhergehenden Ansprüche, wobei in einer Vielzahl von Vorformseiten eine Vielzahl von ersten Külbeln (14) aus einer Vielzahl von ersten Posten geschmolzenen Glases (9) gebildet wird und anschließend in der Vielzahl von Vorformseiten eine Vielzahl von zweiten Külbeln (14) aus einer Vielzahl von zweiten Posten geschmolzenen Glases (9) gebildet werden, so dass die Größe jedes der zweiten Posten geschmolzenen Glases (9) von der zuvor gemessenen Endposition des Stößels (10) der jeweiligen Vorformseite während der Bildung der ersten Posten geschmolzenen Glases (9) abhängt.

## Revendications

1. Machine de formage de verre qui comprend un côté vierge pour former des paraisons (14) à partir de gobelet de verre fondu (9) ; le côté vierge comprend un plongeur (10) et un moule vierge (1) ; le plongeur (10) peut être déplacé dans le moule vierge (1) jusqu'à une position finale ; le plongeur (10) peut être déplacé hors du moule vierge (1) jusqu'à une position de départ ; la machine de formage de verre comprend un dispositif d'alimentation en verre (60) qui est configuré pour amener un gobelet de verre fondu (9) dans le moule vierge (1) ; la machine de formage de verre comprend un dispositif de mesure qui est configuré pour mesurer la position finale du plongeur (10), **caractérisé en ce que** le dispositif d'alimentation en verre (60) est configuré de telle sorte que la taille d'un gobelet de verre fondu (9) dépend de la position finale précédemment atteinte au cours de fonctionnement.

2. Machine de formage de verre selon la revendication précédente, dans laquelle la machine de formage de verre comprend une mémoire pour stocker une plage de positions finales ou une valeur du point de consigne, le dispositif d'alimentation en verre (60) est configuré pour modifier la taille d'un gobelet de verre fondu (9) si une position finale du plongeur (10) précédemment atteinte pendant le fonctionnement n'est pas dans une plage de positions finales stockée ou si une position finale n'a pas atteint la valeur du point de consigne, la taille du gobelet de verre fondu (9) est alors modifiée de telle sorte que, à la suite de la modification, la position finale atteinte ultérieurement se situe dans la plage ou atteint la valeur du point de consigne.

3. Machine de formage de verre selon l'une des revendications précédentes, dans laquelle le dispositif d'alimentation en verre (60) comprend
- un bol d'alimentation (62) adapté pour contenir du verre fondu (40), ledit bol d'alimentation (62) ayant un orifice de décharge (61),
- une aiguille mobile (50),
- un moteur électrique (63) adapté pour déplacer l'aiguille (50) par rapport à l'orifice de décharge (61),
- un dispositif de contrôle (64) configuré pour contrôler le mouvement de l'aiguille (50),
- un capteur (65) pour détecter une information associée à une position de l'aiguille (50) afin de contrôler le mouvement de l'aiguille (50), et
- un mécanisme de cisaillement configuré pour diviser un flux (42) de verre fondu (40) émergeant de l'orifice de décharge (61) en gobelet de verre fondu (9).

4. Machine de formage de verre selon la revendication précédente, dans laquelle le dispositif de contrôle (64) est configuré pour contrôler le mouvement de l'aiguille (50) de telle sorte que la taille d'un gobelet de verre fondu (9) dépende de la position finale précédemment atteinte au cours du fonctionnement.

5. Machine de formage de verre selon la revendication 3 ou 4, dans laquelle le dispositif de contrôle (64) est configuré pour augmenter et diminuer le diamètre du flux (42) de manière oscillante et/ou ondulatoire.

6. Machine de formage de verre selon la revendication 3, 4 ou 5, dans laquelle le moteur électrique (63) est différent d'un moteur pas à pas.

7. Machine de formage de verre selon la revendication précédente, dans laquelle le moteur électrique (63) est un moteur à courant continu sans balais ou un moteur électrique synchrone ou asynchrone ou un moteur linéaire.

8. Machine de formage de verre selon la revendication 3 ou 4 ou 5 ou 6 ou 7, les revendications précédentes, dans laquelle le capteur (65) est configuré pour détecter une position de rotor du moteur électrique (63).

9. Machine de formage de verre selon la revendication 3 ou 4 ou 5 ou 6 ou 7 ou 8, dans laquelle le capteur (65) est un résolveur ou un encodeur tel qu'un encodeur incrémental.

10. Machine de formage de verre selon l'une des revendications précédentes, dans laquelle le côté vierge comprend au moins une section pour former simultanément une pluralité de paraisons (14) à partir de gobelets de verre fondu (9), la section comprenant au moins deux plongeurs (10) et au moins deux moules vierges (1) ; chaque plongeur (10) d'une section étant associé à un moule vierge (1) de la section ; chaque plongeur (10) peut être déplacé dans le moule vierge (1) respectif jusqu'à une position finale ; chaque plongeur (10) peut être déplacé hors du moule vierge (1) respectif jusqu'à une position de départ ; la machine de formage de verre incluant pour chaque section au moins deux aiguilles (50) et deux orifices de décharge (61), chaque orifice de décharge (61) étant associé à l'un des moules vierge de la section et configuré pour amener un gobelet de verre fondu (9) dans le moule vierge (1) respectif ; la machine de formage de verre incluant une pluralité de dispositifs de mesure, chaque dispositif de mesure étant associé à l'un des plongeurs (10) de la section et configuré pour mesurer la position finale du plongeur (10) respectif, dans laquelle le dispositif d'alimentation en verre (60) est configuré de telle sorte que la taille d'un gobelet de verre fondu (9) amené dans l'un des moules vierge (1) d'une section dépend de la position finale du plongeur (10) associé audit moule vierge (1) précédemment atteinte au cours de fonctionnement, dans laquelle, en particulier, la machine de formage de verre comprend au moins deux sections.

11. Machine de formage de verre selon la revendication précédente, dans laquelle chaque dispositif d'alimentation en verre (60) comprend un orifice de décharge (61), une aiguille mobile (50), un moteur électrique (63) adapté pour déplacer l'aiguille (50) par rapport à l'orifice de décharge (61), un dispositif de contrôle (64) qui est configuré pour contrôler le déplacement de l'aiguille (50), et un capteur (65) pour détecter une position de l'aiguille (50) afin de contrôler le déplacement de l'aiguille (50),
dans laquelle, en particulier, le dispositif de contrôle (64) est configuré pour contrôler le mouvement de l'aiguille (50) de telle sorte que la taille d'un gobelet de verre fondu (9) introduit dans l'un des moules vierges (1) d'une section dépende de la position finale du plongeur (10) associé audit moule vierge (1) précédemment atteinte en cours de fonctionnement.

12. Procédé de fabrication de paraisons de verre formé (14), notamment avec une machine de formage de verre selon l'une des revendications précédentes, comprenant
- former une première paraison (14) à partir d'un premier gobelet de verre fondu (9) au moyen d'un côté vierge ayant un plongeur (10) et d'un moule vierge (1), incluant en amenant le premier gobelet de verre fondu (9) dans le moule vierge (1) au moyen d'un dispositif d'alimentation en verre (60) et en déplaçant le plongeur (10) jusqu'à la position finale,
- mesurer la position finale du plongeur (10) au moyen d'un dispositif de mesure,
- former une deuxième paraison (14) à partir d'un deuxième gobelet de verre fondu (9) au moyen du côté vierge, incluant en amenant le deuxième gobelet de verre fondu (9) dans le moule vierge (1) au moyen du dispositif d'alimentation en verre (60) et en déplaçant le plongeur (10) jusqu'à la position finale, dans lequel le dispositif d'alimentation en verre (60) est influencé par la position finale mesurée du plongeur (10) de telle sorte que la taille du deuxième gobelet de verre fondu (9) dépende de la position finale mesurée.

13. Procédé selon la revendication précédente, dans lequel une aiguille (50) du dispositif d'alimentation en verre (60) est déplacée par rapport à l'orifice de décharge (61) par un moteur électrique (63) avant et/ou pendant l'introduction de la deuxième paraison de verre fondu (9) dans le moule vierge (1).

14. Procédé selon la revendication précédente, dans lequel le déplacement de l'aiguille (50) est contrôlé au moyen d'un dispositif de contrôle (64) sur la base d'une information associée à une position de l'aiguille (50) détectée par un capteur (65).

15. Procédé selon l'une des trois revendications précédentes, dans lequel, dans une pluralité de côtés vierges, une pluralité de premiers paraisons (14) sont formées à partir d'une pluralité de premiers gobelet de verre fondu (9) et ensuite, dans ladite pluralité de côtés vierges, une pluralité de secondes paraisons (14) sont formées à partir d'une pluralité de premiers gobelets de verre fondu (9), plusieurs secondes paraisons (14) sont formées à partir de plusieurs seconds gobelets de verre fondu (9) de telle sorte que la taille de chacun des seconds gobelets de verre fondu (9) dépend de la position finale précédemment mesurée du plongeur (10) du côté vierge respectif pendant la formation des premiers gobelets de verre fondu (9).
